(19) Europäisches Patentamt
European Patent Office
Office européen des brevets

(11) **EP 2 634 124 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(51) Int Cl.:
*B65H 5/22* (2006.01)     *B65H 5/00* (2006.01)
*B26D 7/01* (2006.01)     *B65G 51/03* (2006.01)
*B25H 1/02* (2006.01)

(21) Anmeldenummer: **13157588.8**

(22) Anmeldetag: **04.03.2013**

(54) **Verfahren und Anordnung zum Transportieren von Material**

Method and assembly for transporting material

Procédé et agencement destinés au transport de matériaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2012 DE 102012101798**

(43) Veröffentlichungstag der Anmeldung:
**04.09.2013 Patentblatt 2013/36**

(73) Patentinhaber: **PERFECTA Schneidemaschinenwerk GmbH Bautzen 02625 Bautzen (DE)**

(72) Erfinder:
• **Dörsam, Prof. Dr., Edgar**
  **63179 Obertshausen (DE)**
• **Neumann, Dr., Jann**
  **64289 Darmstadt (DE)**
• **Kaulitz, Dr., Thomas**
  **02625 Bautzen (DE)**
• **Greif, Dr., Michael**
  **02694 Grodubrau (DE)**

(74) Vertreter: **Stoffregen, Hans-Herbert Patentanwalt Friedrich-Ebert-Anlage 11b 63450 Hanau (DE)**

(56) Entgegenhaltungen:
EP-A1- 0 828 101     DE-A1- 2 134 512
DE-A1- 2 141 957     DE-A1-102005 060 749
FR-A2- 2 256 354     GB-A- 1 236 125
US-A- 2 785 928     US-A1- 2005 117 980

EP 2 634 124 B1

**Beschreibung**

Die Erfindung bezieht sich auf ein Verfahren zum Anheben von entlang einer Transportebene zu bewegendem Material, insbesondere Lage oder Stapel von Bogen, wobei das Material von Öffnungen in der Transportebene durchsetzender Druckluft beaufschlagt wird, die einem die Transportebene unterseitig begrenzenden Raum zugeführt wird, in dem ein Druck $p_i$ herrscht.

Auch nimmt die Erfindung Bezug auf eine Anordnung zum Transportieren von Material, insbesondere einer Lage oder eines Stapels von Bogen, umfassend eine von Öffnungen durchsetzte Transportebene, einen sich entlang dessen Unterseite erstreckenden Raum, in dem ein Druck $p_i$ herrscht und mit dem die Öffnungen verbunden sind, sowie eine mit dem Raum verbundene Druckluftquelle.

Um auf einfache Weise Papierstapel zwischen Bearbeitungsstationen zu transportieren, werden Lufttische eingesetzt, die in ihren Deckplatten eine Vielzahl von Öffnungen aufweisen, die von Luft durchströmt werden. Dabei wird ein Luftpolster oder -kissen dann aufgebaut, wenn die zu transportierenden Stapel die Öffnungen abdecken. Hierdurch wird ein schwimmender Transport der Stapel ermöglicht.

Der DE-C-24 49 620 ist ein Lufttisch zu entnehmen, dessen Öffnungen über transportseitig ballig abgerundete Verschlusselemente dann verschlossen werden, wenn auf diese von der Transportebene her eine Kraft nicht einwirkt. In diesem Fall stehen die Verschlusselemente über der Außenseite der Deckplatte vor.

Wirkt durch einen zu fördernden Stapel auf die Verschlusselemente eine Kraft, so werden diese in den Zwischenraum zwischen Deckplatte und Trägerplatte gedrückt, wodurch die Öffnungen teilweise freigegeben werden und Luft zur Bildung des Luftkissens ausströmen kann.

Andere entsprechende Lufttischkonstruktionen sehen in den Öffnungen axial verschiebbare Kugelelemente vor, die ebenfalls die Funktion eines Ventils ausüben und über Federelemente zum Verschließen der Öffnungen in Richtung der Deckplatte kraftbeaufschlagt sind.

Entsprechende Konstruktionen weisen den Nachteil auf, dass sie aufwendig sind. Durch die Lagerung der einzelnen Verschlusselemente ist des Weiteren ein relativ großer Rasterabstand zwischen den Öffnungen erforderlich. Ein üblicher Abstand beträgt 150 mm. Durch die Verwendung von Einsätzen muss die Deckplatte ebenfalls eine gewisse Dicke aufweisen, um ein einwandfreies Fixieren der Ventileinsätze zu gewährleisten.

Des Weiteren ist der Nachteil gegeben, dass sich der Lufttisch dann unerwünscht erwärmen kann, wenn sämtliche Öffnungen verschlossen werden. Nachteilig ist auch, dass dann, wenn verspanntes Bogenmaterial transportiert werden soll, die Verschlusselemente nicht zwingend im erforderlichen Umfang verstellt werden, nämlich in den Bereichen, in denen das Bogenmaterial in Bezug auf die Transportebene zurückversetzt verläuft. Somit ist nicht gewährleistet, dass sich über die gesamte Fläche des Stapels ein Luftkissen im erforderlichen Umfang ausbilden kann.

Beim Transport von Stapeln aus mattem Papier tritt ferner der Nachteil auf, dass durch den Kontakt mit den Verschlusselementen Markierungen auftreten. Diese Nachteile können durch einen Lufttisch behoben werden, indem in die Öffnungen Ventilkörper eingesetzt werden, deren Verschlusselemente in Abhängigkeit von dem auf die Öffnungen einwirkenden Druck verstellt werden, ohne die Öffnungen nach außen hin zu durchsetzen.

Andere Konstruktionen von Lufttischen sehen vor, dass die Öffnungen nicht verschließbar sind, sondern durch diese fortwährend Luft austritt. Hierdurch werden Personen, die an einem entsprechenden Lufttisch arbeiten, fortwährend der aus den Öffnungen austretenden Luft ausgesetzt, so dass sich ein unerwünschter Föhneffekt ergibt. Eine entsprechende Konstruktionen ist z.B. der DE-U-75 03 458 zu entnehmen.

Um ungeachtet fortwährender freier Öffnungen diese Nachteile zu vermeiden, sieht die DE-U-75 05 601 gerichtete Luftaustrittsöffnungen vor, die schräg zur Längsrichtung der Transportbahn verlaufen. Hierdurch wird allerdings der Nachteil in Kauf genommen, dass die Deckplatten relativ dick sein müssen, um eine entsprechende Austrittsrichtung sicherzustellen.

Ein für Stofflagen bestimmter Lufttisch ist aus der DE-U-77 31 677 bekannt. Um den Volumenstrom der aus den Öffnungen austretenden Druckluft zu reduzieren, werden in die Öffnungen Einsätze aus porösem Material eingepresst oder geklebt. Um ein Halten der Einsätze sicherzustellen, ist in der Öffnung eine Ringschulter vorgesehen, gegen den sich der Einsatz anlegt.

Bei einem Lufttisch nach der DE-U-20 2010 005 241 ist eine Deckplatte mit Luftaustrittsöffnung vorgehen, die einen Zwischenraum abdeckt, der mit einer Druckluftquelle verbunden ist. In dem Zwischenraum sind ein oder mehrere jeweils mehreren Öffnungen zugeordnete flächige Elemente aus porösem Material angeordnet, um dann, wenn nur einige Öffnungen abgedeckt sind, über die weiteren Öffnungen eine Zugerscheinung zu reduzieren. Da jedoch die Luft sich den geringsten Widerstand sucht, muss über die nicht abgedeckte Öffnung eine größere Luftmenge austreten bzw. tritt weniger Luft an den abgedeckten Öffnungen aus, so dass ein Anheben der Licht nicht gewährleistet ist.

Bei einem Lufttisch nach der DE-A-102 59 754 ist unterhalb eines Lochblechs ein einen Strömungswiderstand erzeugendes Filtergewebe angeordnet. Auch bei dieser Konstruktion strömt in Abhängigkeit von der Anzahl der abgedeckten Löcher in den verbleibenden Löchern mehr oder weniger Luft hindurch.

Unabhängig von den vorbekannten Konstruktionen der Lufttische muss der auch als Hohlraum zu bezeichnende Zwischenraum recht großvolumig sein, um den erforderlichen Luftdurchsatz sicherzustellen. Hierzu ist vorgesehen, dass die Deckplatte gegenüber der Trägerplatte über z.B. Durchbrechungen aufweisende Vierkantrohre abgestützt wird. Dies führt zu dem Nachteil, dass mehrere Lufttische grundsätzlich nur in den Bereichen miteinander verbunden werden können, in denen die Vierkantrohre verlaufen. Einem beliebigen modulartigen Zusammensetzen von Lufttischen ist hierdurch Grenzen gesetzt.

Aus der US-A-4 874 273 ist ein Lufttisch bekannt, auf dessen Oberfläche mittels hydrodynamischen Drucks Wafer transportiert werden. Hierzu wird die aus den Öffnungen des Lufttischs austretende Luft gerichtet abgeblasen, um zum Transport tangentiale Kräfte zu erzeugen, mittels der die Wafer entlang der Oberfläche gefördert werden. In Abhängigkeit des Abstands zwischen dem Wafer und der Lufttischtransportebene ändert sich der durch die Öffnung austretende Volumenstrom. Die zu transportierenden Wafer müssen einen großen Strömungswiderstand bilden, damit im hinreichenden Umfang eine Impulsübertragung von dem Massenstrom, also der Luft auf die zu transportierenden Wafer erfolgt. Die erforderliche Druckluft wird über einen Kanal einem Vorraum zugeführt, der in die Öffnung übergeht.

Die US 2 785 928 A bezieht sich auf eine Transportvorrichtung für Stapel blattförmigen Materials. Hierzu weist eine Tischplatte von Kugelventilen verschließbare Öffnungen auf, entlang der der Stapel bewegt werden soll. Die Kugeln stehen über der Transportfläche vor und werden in den Tisch hineingedrückt, sobald der Stapel sich auf diesen befindet.

Gegenstand der US 2005/0117980 A1 ist eine Werkstücklevitationsvorrichtung. Es werden Fluidausstrahlelemente benutzt, die eine Vielzahl von Poren aufweisen, die jeweils einen Innendurchmesser von etwa 100 $\mu$m oder mehr aufweisen. Um die Druckluft zu reduzieren, die zwischen einem Werkstück und einer Werkstückhaltefläche herrscht, die von den Fluidausstrahlelementen durchsetzt sind, sind Ringnuten oder Oberflächenunebenheiten vorhanden, die einen Durchflussratenreduzierer bilden.

Eine Werkzeugmaschine zur Bearbeitung von Holz- oder Kunststoffplatten ist aus der DE 21 41 957 A bekannt. Eine Tischplatte weist Mündungsöffnungen 4 auf, die von Druckluft durchströmt werden. Dieses Dokument offenbart ein Verfahren und eine Anordnung gemäß den Oberbegriffen der Ansprüche 1, 2 und 8. Aus der DE 21 34 512 A ist ein Luft-Schwebetisch für die Förderung von Laststücken bekannt.

Bei einem Strömungsmittelventil nach der FR 2 256 354 A ist in einer Öffnung ein federvorgespannter Verschluss verstellbar, der in Abhängigkeit von einem von einem Objekt erzeugten Gegendruck in der Öffnung derart verstellbar ist, dass Druckluft in Richtung des Objektes strömen und damit dieses anheben kann.

Eine Luftlevitationsvorrichtung mit Neutralisationseinrichtung wird in der DE 10 2005 060 749 A1 beschrieben. Dabei besteht die Möglichkeit, die Luftstrahlöffnung über ein poröses Material zu verschließen.

Eine Gaskissen-Tragvorrichtung nach der GB 1 236 125 A weist eine horizontal verlaufende Wand mit Öffnungen auf, die jeweils von einer elastischen Membran abgedeckt sind, die dann die Öffnungen freigibt, wenn die Öffnung von einem Objekt verschlossen wird, so dass der zwischen der Membran und der Innenseite der horizontalen Wandung verlaufende Raum von über die Membran strömender Druckluft beaufschlagt wird. Gleichzeitig besteht sodann die Möglichkeit, dass über die Öffnung Druckluft strömt, so dass ein zu transportierendes Objekt angehoben wird.

Die EP 0 828 101 A1 bezieht sich auf passiv adressierbare Ventile, um einen Fluidstrom zu steuern.

Der vorliegenden Erfindung liegt die Aufgabe zugrunde, ein Verfahren und eine Anordnung der eingangs genannten so weiterzubilden, dass eine Reduzierung des Luftverbrauchs erfolgt. Auch soll die Anordnung kostengünstig herstellbar sein. Insbesondere soll vermieden werden, dass die Unterseite des Materials, also bei einem Stapel der untere Bogen bzw. durch Ventile oder sonstige Bauteile beschädigt wird. Es sollen reproduzierbare Betriebsbedingungen auch bei einer unterschiedlichen Anzahl von Öffnungen und unterschiedlicher Flächenerstreckung der Transportebene möglich sein. Zugerscheinungen von durch nicht abgedeckte Öffnungen hindurchtretende Luft beim händischen Verschieben der Materialien entlang der Transportebene sollen vermieden werden.

Verfahrensmäßig wird die Aufgabe im Wesentlichen dadurch gelöst, dass eine Entkopplung des in dem Raum herrschenden Drucks $p_i$ von durch die Öffnungen strömenden Volumenstroms $\dot{V}$ derart erfolgt, dass von dem Material unbedeckte Öffnungen mit n ≥ 1 jeweils mit einem Volumenstrom $\dot{V}$ der Druckluft durchströmt werden, der unabhängig oder weitgehend unabhängig von in dem Raum herrschenden Druck $p_i$ ist, wobei der Druck $p_i$ auf einen Wert eingestellt wird, der größer als von dem Material auf abgedeckte m-Löcher mit m ≥ 1 einwirkender Druck $p_L$ ist. Dabei sollte jeder Öffnung ein Vorraum vorgeordnet sein, der von dem Raum ausgeht, in dem der Druck $p_i$ herrscht.

Erfindungsgemäß ist es allein erforderlich, dass der Volumenstrom so eingestellt wird, dass das entlang der Transportebene zu fördernde Material in einem Umfang angehoben wird, dass das reibungsarme Verschieben ermöglicht wird. Entgegen des hydrodynamischen Staudrucks, der durch abruptes Ablenken eines gerichteten, massebehafteten Fluidstromes an einer Oberfläche mit merklichem Strömungswiderstand erzeugt wird, wird beim hydrostatischen Prinzip keine gerichtete Strömung benötigt. Es wird vielmehr das Wirkprinzip ausgenutzt, dass ein in einem Hohlraum wirkender Druck eine orthogonal wirkende Kraft auf die den Raum begrenzende Flächen ausübt. Dieses physikalische Prinzip liegt an, wenn die den Raum begrenzenden Flächen annährend Fluidundurchlässig sind. Von dieser Voraussetzung kann bei den zu transportierenden Lagen zumindest in orthogonaler Richtung zum Bogenmaterial oder Stapel ausgegangen werden.

Durch den Druck p$_i$ bildet sich ein Hohlraum zwischen Material und Transportoebene, die die Reibung zwischen dem Material und der Transportebene reduziert. Lediglich an den Umfangsflächen, die die Lage oder Material begrenzen, kann Luft bzw. Fluid in tangentialer Richtung zur Transportebene und Materialebene aus dem Holraum entweichen. Der Strömungswiderstand, der dieser tangential entweichenden Luft entgegen gebracht wird, wird als $R_L$ bezeichnet. Lediglich diese entweichende Luftmenge muss bei der vorliegenden Erfindung durch den Volumenstrom $\dot{V}$ der abgedeckten Öffnungen m ≥ 1 nachgeführt bzw. ausgeglichen werden, um den hydrostatischen Druck zum Anheben der Lage aufrechtzuerhalten. Im Vergleich zum bisher bekannten Stand der Technik ist diese entweichende Luftmenge so klein im Vergleich zur Anzahl abgedeckter Öffnungen m, dass eine einzeln betrachtete Öffnung m mit sehr geringem Volumenstrom $\dot{V}$ betrieben werden kann. Zudem ist - wie erwähnt - zum Aufrechterhalten des Hohlraumes keine gerichtete Strömung notwendig ist, so dass neben dem energetisch günstigen Betrieb durch sehr kleinen Volumenstrom auch der immanente Nachteil von Zugerscheinung an der Oberfläche der Transportebene beseitigt werden kann.

Erfindungsgemäß erfolgt in Abweichung vom Stand der Technik eine Entkopplung zwischen dem in dem unterhalb der Transportebene vorhandenen Raum herrschenden Druck p$_i$ und dem Volumenstrom durch die Öffnungen, über die ein Luftkissen aufgebaut wird, für das entlang der Transportebene von Hand zu bewegende Material. Hierdurch ist sichergestellt, dass unabhängig von der Anzahl der durch das Material abgedeckten Öffnungen durch die verbleibenden nicht geschlossenen Öffnungen stets der gleiche Volumenstrom $V$ strömt, so dass die dem Stand der Technik immanenten Nachteile in Bezug auf das Auftreten von Zugerscheinungen bzw. störenden Geräuschen unterbleibt. Auch kann durch diese Maßnahmen energetisch günstig verfahren werden.

Eine Möglichkeit, um den Volumenstrom unabhängig vom Innendruck in Bezug auf die nicht abgedeckten Öffnungen konstant oder im Wesentlichen konstant zu halten, ist insbesondere dann gegeben, dass vor jeweiliger Öffnung ein Strömungswiderstand $R_O$ für die Druckluft aufgebaut wird mit $R_O \gg R_L$, wobei $R_L$ Strömungswiderstand ist, der von dem m-Öffnungen mit m ≥ 1 abdeckenden Material gegenüber der die n-Öffnungen mit n ≥ 1 durchsetzenden Druckluft erzeugt wird. Insbesondere ist vorgesehen, dass der Strömungswiderstand $R_O$ zu dem Strömungswiderstand $R_L$ derart eingestellt wird, dass $2 R_L \leq R_O \leq 1000 R_L$, insbesondere $5 R_L \leq R_O \leq 1000 R_L$, bevorzugterweise $10 R_L \leq R_O \leq 100 R_L$ ist.

Zur Erzeugung des hohen Strömungswiderstandes $R_O$ sind mehrere Maßnahmen möglich. So sieht ein Vorschlag der Erfindung vor, dass jeder Öffnung raumseitig ein gesonderter Vorraum vorgeordnet wird, der mit dem Raum, in dem der Druck p$_i$ herrscht, über

einen Kanal wie eine Hohlnadel verbunden wird.

Ein weiterer Lösungsgedanke sieht vor, dass der Öffnung raumseitig ein Vorraum vorgeordnet wird, der mit dem Raum über eine mikroperforierte Folie verbunden wird.

Bevorzugt ist aber auch, dass der Öffnung raumseitig ein Vorraum vorgeordnet wird, der mit dem Raum über einen porösen Körper, insbesondere einen Körper aus der Gruppe Aktivkohle, Keramik, Metallschaum verbunden wird. Gegebenenfalls kann der poröse Körper auch ohne Vorraum an der Unterseite einer die Transportebene bildenden Platte fixiert werden, wobei die Öffnung abgedeckt wird.

Mittels mikroperforierter Folien kann ein hoher definierter Widerstand erzeugt werden. Entsprechende Folien werden z.B. in der Tabakindustrie verwendet. Es handelt sich um ein günstiges Massenprodukt. Die mikroperforierte Folie kann auch unmittelbar auf dem raumseitigen Eintritt der Öffnung angebracht werden, so dass in diesem Fall eine Vorraum - auch Vorkammer genannt - nicht vorgesehen ist, gleichwenn bevorzugt jeder Öffnung ein Vorraum vorgeschaltet sein sollte, um den erforderlichen hydrostatischen Druck zum Anheben des Materials aufzubauen oder eventuell Reste einer gerichteten Strömung in eine urigerichtete zu verwandeln.

Die Verwendung eines Kanals wie einer Hohlnadel wie Kanüle zeigt den Vorteil, dass dieser bzw. diese bei ausreichend hohem Druck wie eine "kritische Düse" agiert. Kritische Düsen machen sich die Eigenschaft zunutze, dass die maximal erreichbare Strömungsgeschwindigkeit von der Schallgeschwindigkeit begrenzt wird. Ist die Schallgeschwindigkeit erreicht, kann der Durchsatz nicht mehr gesteigert werden. Vorzugsweise weist der Kanal wie die Hohlnadel einen Querschnitt qi mit $0,01 \text{ mm}^2 \leq qi \leq 0,2 \text{ mm}^2$ auf.

Auch kann der Kanal wie die Hohlnadel als Laminar Flow Element ausgebildet sein.

Keramikkörper, insbesondere nicht durchgesinterte Keramikkörper, Metallschaum und Aktivkohle weisen eine poröse Struktur auf und sind luftdurchlässig. Hierdurch kann ein definierter Widerstand erzeugt werden, in dem die aus dem Raum in die Öffnung tretende Luft einen entsprechenden Körper zuvor durchdringen muss. Durch die Porösität, d.h. Stärke der Verdichtung der Körper kann der Widerstand gezielt eingestellt werden. Entsprechende Materialien kostengünstig herstellbar und haben sich in der Technik bewährt, insbesondere hinsichtlich der Aktivkohle.

Auch andere Maßnahmen zur Einstellung des erforderlichen Strömungswiderstandes vor der Öffnung sind möglich. Gewebe, Membranen, Filter oder sonstige Elemente sind insoweit gleichfalls zur Verwirklichung der Erfindung erfasst.

Durch die Gestaltung des jeder Öffnung vorgeordneten Vorraums bzw. des Materials wird sichergestellt, dass die aus den Öffnungen austretende Luft unabhängig davon, ob sich oberhalb der Öffnung ein Material befindet oder nicht, die gleiche Strömungsgeschwindigkeit besitzt, wobei unmittelbar nach Austreten aus der Öffnung eine Verwirbelung der Luft derart erfolgt, dass eine gerichtete Beaufschlagung des Materials nicht mehr erfolgt.

Eine Anordnung der eingangs genannten Art zeichnet sich dadurch aus, dass eine Entkopplung des in dem Raum herrschenden Drucks pi von dem die Öffnungen durchströmenden Volumenstroms durch Aufbau eines Strömungswiderstands Ro vor den Öffnungen erfolgt, wobei Ro >> $R_L$ mit $R_L$ Strömungswiderstand des Materials ist, der auf von dem Material abgedeckten m-Öffnungen mit $m \geq 1$ erzeugbar ist.

Dabei ist insbesondere vorgesehen, dass raumseitig jeder Öffnung jeweils ein Vorraum vorgeordnet ist, der mit dem Raum, der unmittelbar mit Druckluft beaufschlagt wird und in dem der Druck $p_i$ herrscht, über eine Hohlnadel verbunden ist. Eine Alternative sieht vor, dass raumseitig jeder Öffnung jeweils ein Vorraum vorgeordnet ist, der mit dem Raum über eine mikroperforierte Folie verbunden ist.

Auch besteht die Möglichkeit, dass raumseitig der Öffnung ein Vorraum vorgeordnet ist, der mit dem Raum über einen porösen Körper, insbesondere einen Körper aus der Gruppe Aktivkohle, Keramik, Metallschaum verbunden ist.

Selbstverständlich wird die Erfindung nicht verlassen, wenn die mikroperforierte Folie oder der poröse Körper unmittelbar die Öffnung abdeckt, ohne dass ein Vorraum bzw. eine Vorkammer vorhanden ist, da zum Aufrechterhalten des Wirkprinzips des hydrostatischen Drucks keine Vorkammer notwendig ist. Diese wird lediglich verwendet, um eine ungerichtete Strömung zu erzeugen.

Aufgrund der erfindungsgemäßen Lehre ergibt sich des Weiteren der Vorteil, dass die die Öffnung durchsetzende Luft eine Strömungsgeschwindigkeit aufweist, die zu Zugerscheinungen oberhalb der Transportebene nicht führt. Insbesondere ist vorgesehen, dass die Dimensionierung der den Öffnungen vorgeschalteten Bauelemente, die den gewünschten hohen Strömungswiderstand erzeugen, derart dimensioniert sind, dass die Strömungsgeschwindigkeit zwischen 150 mm/sek und 250 mm/sek im Abstand zwischen 3 cm und 10 cm von der Transportebene aus betrachtet beträgt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugtem Ausführungsbeispielen.

Es zeigen:

Fig. 1 eine Prinzipdarstellung der Funktionsweise eines konventionellen Lufttisches ohne Ventile mit zugeordneten Kennlinien von Volumenstrom in Abhängigkeit der Druckdifferenz,

Fig. 2 eine weitere Prinzipdarstellung des Lufttisches nach Fig. 1 mit Kennlinien,

Fig. 3 eine Prinzipdarstellung eines Lufttisches mit Ventilen und zugehöriger Kennlinie,

Fig. 4 eine Kennlinie eines erfindungsgemäßen Lufttisches,

Fig. 5 eine Prinzipdarstellung eines Lufttisches,

Fig. 6 ein Ausschnitt einer Ausführungsform eines erfindungsgemäßen Lufttisches mit Kennlinie,

Fig. 7 eine weitere Ausführungsform eines erfindungsgemäßen Lufttisches im Ausschnitt mit Kennlinie,

Fig. 8 eine weitere Ausführungsform eines erfindungsgemäßen Lufttisches im Ausschnitt mit Kennlinie,

Fig. 9 ein Ausschnitt einer weiteren Ausführungsform eines erfindungsgemäßen Lufttisches,

Fig. 10 ein Detail des Lufttisches gemäß Fig. 9 und

Fig. 11 ein Ersatz-Schaltbild.

In den Figuren soll die Erfindung anhand eines Lufttisches zum Transportieren von Materialien, insbesondere in Form einer Lage bzw. eines Stapels von Papierbogen beschrieben werden, ohne dass hierdurch eine Einschränkung erfolgen soll. Vielmehr ist die erfindungsgemäße Lehre überall dort anwendbar, wo entlang einer Transportebene Material bewegt werden soll, wobei Material über ein Luftpolster zur Verringerung der Reibung entlang der Transportebene insbesondere von Hand bewegt wird. Als Materialien kommen z.B. auch Bleche oder Stoffe in Frage.

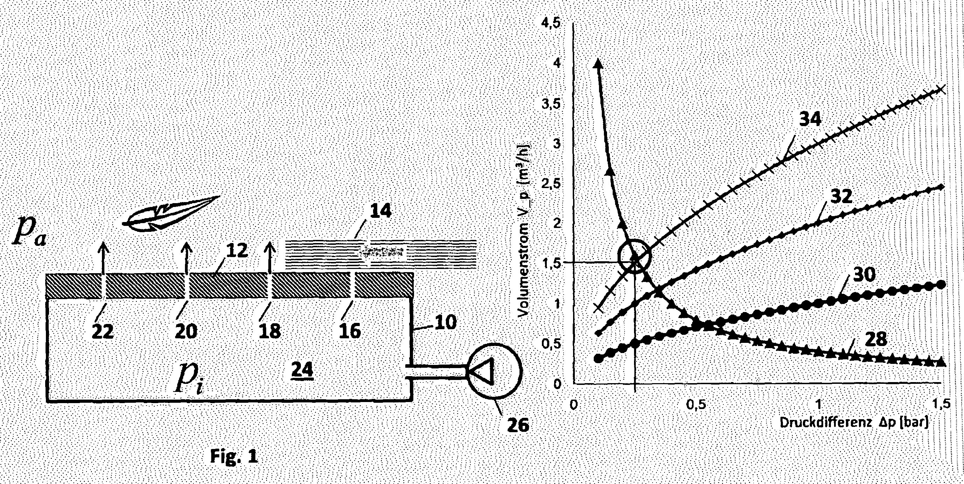

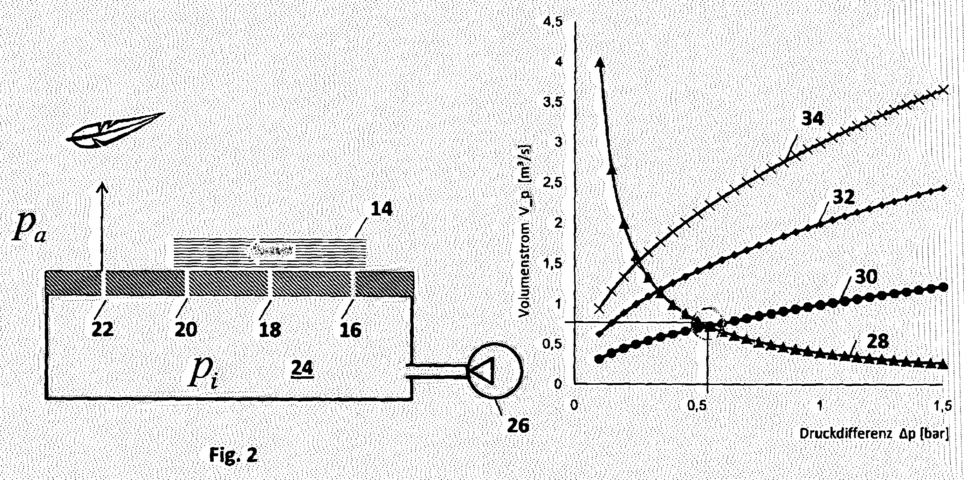

Den Fig. 1 bis 3 sind Prinzipdarstellungen von konventionellen Lufttischen zu entnehmen. So ist den Fig. 1 und 2 ein Lufttisch 10 dargestellt, dessen Oberfläche als Transportebene 12 ausgebildet ist. Entlang der Transportebene 12 soll eine Lage von Papierbogen 14 bewegt werden. Damit ein reibungsarmes Bewegen möglich ist, wird die Lage 14 auf einem Luftpolster gelagert, das sich zwischen der Transportebene 12 und der Unterseite der Lage 14 dadurch ausbildet, dass die Transportebene 12 von Bohrungen 16, 18, 20, 22 durchsetzt ist, durch die Druckluft strömt, die einem unterhalb der Transportebene 12 vorhandenen Raum 24 über ein Gebläse 26 zugeführt wird, so dass sich in dem Raum 24 ein Druck $p_i$ ausbildet. Der Druck außerhalb des Tisches 10 ist mit $p_a$ gekennzeichnet.

In der Darstellung überdeckt die Lage 14 die Bohrung 16. In der rechten Darstellung der Fig. 1 ist der Volumenstrom $\dot{V}$ über der Druckdifferenz $\Delta p$ dargestellt.

Die Druckdifferenz $\Delta p$ ist die Differenz zwischen $p_i$ und $p_a$ und ist größer 0. Der Volumenstrom V durch die Bohrungen 16, 18, 20, 22 wird durch die Beziehung

$$\dot{V} = c \cdot \sqrt[x]{\Delta p}$$

angegeben, wobei x und c eine Konstante und abhängig von der Bauform und den Gaseigenschaften ist.

In der Kurve 28 ist die Kennlinie des Gebläses 26 dargestellt. Die durch Striche gebildete Kurve 34 gibt dem Volumenstrom in Abhängigkeit von der Druckdifferenz bei Abdeckung des Lochs der Bohrung 16 wieder. Die durch Quadrate gebildete Kurve 32 entspricht der Kennlinie bei zwei abgedeckten Bohrungen 16, 18. Die durch Punkte gebildete Kurve 30 entspricht der Abhängigkeit des Volumenstroms von der Druckdifferenz für abgedeckte Bohrungen 16, 18, 20. Der Schnittpunkt der Linien 28, 30, 32, 34 entspricht der Gleichgewichtsbedingung. Damit die Lage 14 angehoben werden kann, muss eine vorgegebene Druckdifferenz $\Delta p$ min herrschen, die größer ist als $p_i - p_L$. $p_L$ ist dabei der Druck der Lage 14, der auf die abgedeckte Bohrung gegen den diese durchsetzenden Volumenstrom entgegenwirkt.

Ist im Ausführungsbeispiel ein Differenzdruck von 0,25 bar erforderlich, damit die Lage 14 entlang der Transportebene 12 auf einem Luftpolster transportiert werden kann, so reicht das zum Einsatz gelangte Gebläse 26 aus, da unabhängig von der Anzahl der abgedeckten Bohrungen 16, 18, 20, 22 stets die erforderliche Druckdifferenz herrscht.

Die Fig. 2 entspricht der Prinzipdarstellung der Fig. 1 mit der Einschränkung, dass beim Transport der Lage 14 eine Druckdifferenz von 0,5 bar erforderlich sein soll. In diesem Fall kann die Lage 14 dann, wenn zumindest zwei Bohrungen abgedeckt sind, nicht mehr angehoben werden, vielmehr liegt die Lage 14 auf der Transportebene 12 auf. Um infolgedessen ein Luftpolster auszubilden, muss ein Gebläse mit einer Kennlinie zum Einsatz gelangen, das sicherstellt, dass während des gesamten Transportes der Lage 14 auf der Transportebene 12 und unabhängig von der Anzahl der abgedeckten Bohrungen die erforderliche Druckdifferenz von 0,5 bar herrscht.

Aus einem Vergleich der Fig.1 und 2 ergibt sich des Weiteren, dass der Volumenstrom der nicht abgedeckten Bohrungen in Abhängigkeit von den abgedeckten Bohrungen zunimmt mit der Folge, dass unerwünschte Zugerscheinungen und Geräusche auftreten können. Die Änderung des Volumenstroms wird durch die Länge der aus den Bohrungen 16, 18, 20, 22 austretenden Pfeile symbolisiert.

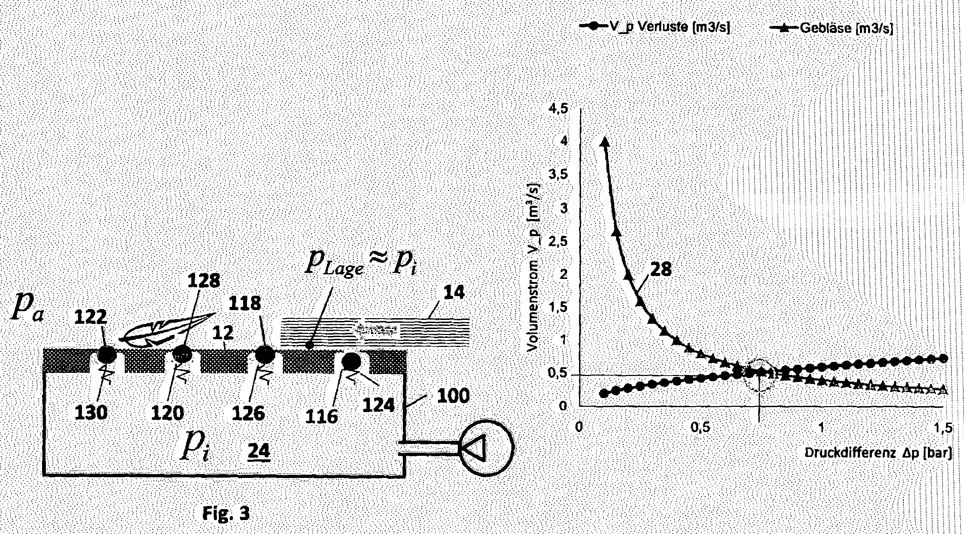

Der Fig. 3 ist ein Lufttisch 100 zu entnehmen, bei dem in der Transportebene 12 vorhandene Öffnungen 116, 118, 120, 122 durch als Sensoren wirkende Ventile 124, 126, 128, 130 verschlossen werden. Ein Volumenstrom über die durch die Ventile 126, 128, 130 verschlossenen Öffnungen 118, 120, 122 ist auf Grund auftretender Verluste infolge nicht hinreichender Abdichtung bedingt. Nachteil entsprechender Lufttische ist der hohe Fertigungsaufwand. Zudem besteht das Risiko, dass der unterste Bogen der Lage 14 auf Grund des Kontaktes mit den Ventilen beschädigt bzw. verfärbt werden kann.

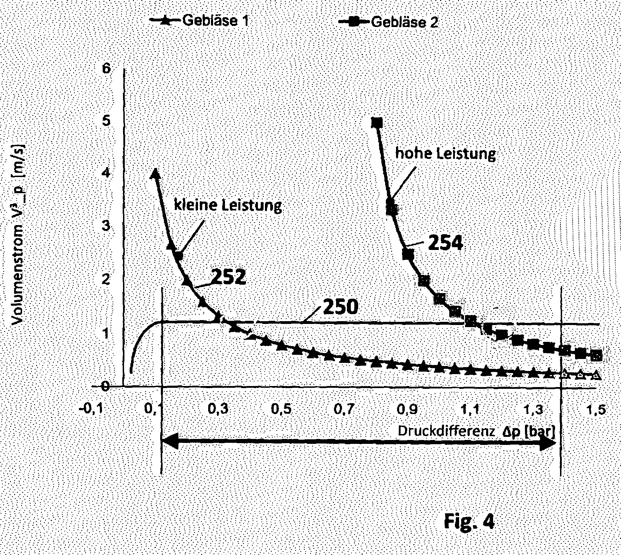

Abweichend von vorbekannten Techniken sieht die Erfindung vor, dass ein Lufttisch derart ausgebildet ist, dass der Volumenstrom $\dot{V}$ durch eine oder mehrere nicht abgedeckte Öffnungen weitestgehend unabhängig von der Anzahl der abgedeckten Öffnungen ist, also weitestgehend unabhängig vom in dem Raum herrschenden Druck $p_i$ ist, der sich unterhalb der Öffnungen befindet und der mit der erforderlichen Druckluft beaufschlagt wird, damit die Druckdifferenz $\Delta p$ erzeugt werden kann, die erforderlich ist, dass die Lage angehoben wird. Die Druckdifferenz $\Delta p$ ist größer als die Differenz des Drucks $p_i$ in dem Raum und dem von der Lage erzeugte Druck. Dies soll rein prinzipiell anhand der Fig. 4 verdeutlicht werden. In dieser ist gleichfalls der Volumenstrom in Abhängigkeit von der Druckdifferenz dargestellt. Die Durchflusskennlinie durch die nicht abgedeckten Öffnungen wird durch die Kurve 250 symbolisiert. Man erkennt, dass über einen weiten Druckdifferenzbereich der Volumenstrom unverändert, also nahezu konstant ist. Dies bedeutet, dass der Differenzdruck erhöht werden kann, ohne dass der Volumenstrom erhöht wird. Beispielhaft sind in der Fig. 4 Kennlinien 252, 254 von Gebläsen unterschiedlicher Leistungen eingezeichnet.

Es können Gebläse unterschiedlicher Leistungen zum Einsatz gelangen, ohne dass der Volumenstrom durch die nicht abgedeckten Öffnungen bzw. Bohrungen verändert wird.

Somit ist der Volumenstrom nicht mehr eine Funktion des Differenzdrucks zwischen Innendruck $p_i$ und Außendruck $p_a$.

Es wird der hydrostatische Druck der an den Öffnungen austretenden Luft benutzt, um die Lage anzuheben. Dabei ist der Volumenstrom derart, dass unmittelbar nach Austritt der Luft aus den Öffnungen eine diffuse Strömung entsteht.

Damit der Volumenstrom unabhängig von der Druckdifferenz wird, sind technisch beispielhaft verschiedene Möglichkeiten anzugeben.

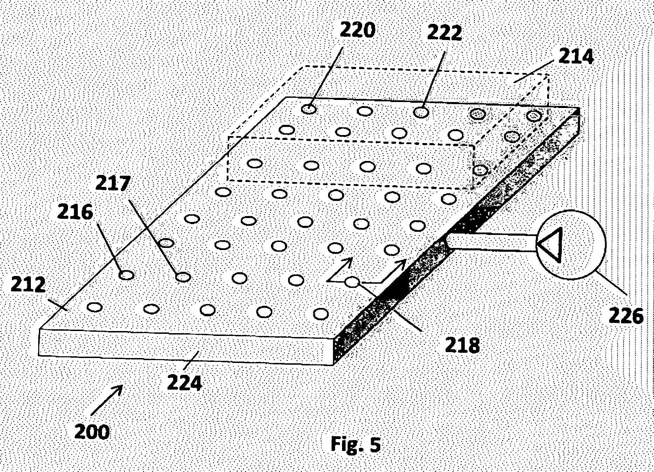

Ein Lufttisch 200 ist rein prinzipiell der Fig. 5 zu entnehmen. Dieser weist eine Transportebene 212 auf, entlang der eine Lage 214 bewegt werden soll, und zwar schwebend, indem sie zwischen der Unterseite der Lage 214 und der Transportebene 212 ein Luftpolster ausbildet. Durch das Luftpolster ist ein problemloses Verschieben der Lage 214 entlang der Transportebene 212 von Hand möglich.

Die Transportebene 212 weist eine Vielzahl von Löchern auf, von denen unbedeckte Löcher mit den Bezugszeichen 216, 217, 218 und bedeckte Löcher mit den Bezugszeichen 220, 222 rein beispielhaft gekennzeichnet sind. Jeder der Öffnungen 216, 217, 218, 220, 222 ist eine Vorkammer vorgeordnet.

Die Transportebene 212 schließt oberseitig einen umfangsseitig geschlossenen Raum 224 ab, der mit einem Gebläse 226 verbunden ist, um in dem Raum 224 einen Druck $p_i$ zu erzeugen. Erwähntermaßen ist der Volumenstrom durch die nicht abgedeckten Öffnungen 216, 217, 218 unabhängig von der Anzahl der durch die Lage 214 abgedeckten Öffnungen 220, 222 und damit von dem im Raum 224 herrschenden Druck $p_i$.

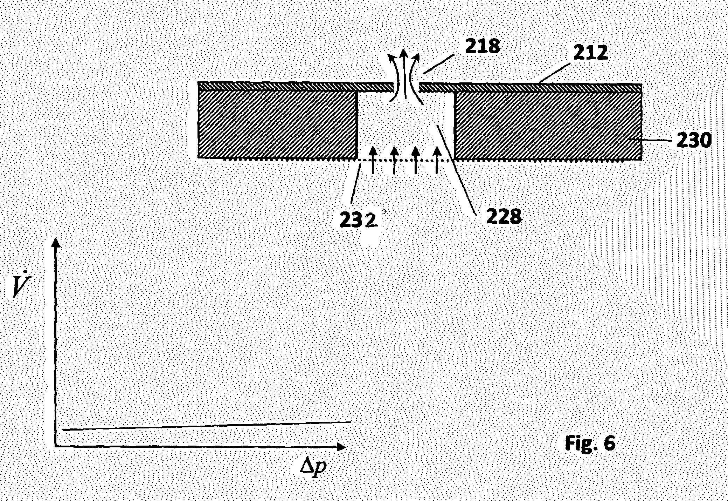

In Fig. 6 ist ein Ausschnitt einer Ausführungsform des erfindungsgemäßen Lufttisches 200 rein prinzipiell wiedergegeben. Man erkennt die Transportebene 212 und die Öffnung 218 dieser.

Der Öffnung 218 ist eine Vorkammer 228 zugeordnet, die durch eine Bohrung einer Zwischenplatte 230 gebildet werden kann, die sich innerhalb des Raums 224 unterhalb einer Platte 234 erstreckt, die außenseitig die Transportebene 212 bildet. Die Vorkammer 228 kann gegenüber dem Raum 224 über eine mikroperforierte Folie 232 verschlossen werden, über die folglich eine Verbindung zwischen der Vorkammer 228 und dem Raum 224 besteht. Durch die perforierte Folie 232 wird ein Strömungswiderstand derart aufgebaut, dass der Volumenstrom durch die Öffnung 218 unabhängig von dem in dem Raum 224 herrschenden Druck $p_i$ und damit von der Anzahl der abgedeckten Öffnungen 220, 222 ist. Man erkennt des Weiteren, dass die Vorkammer 228 in die Bohrung 218 übergeht, wobei die Vorkammer 228 parallel zur Transportebene 212 einen größeren Querschnitt als die Öffnung 218 aufweist.

Durch das Luftpolster ist ein problemloses Verschieben der Lage 214 entlang der Transportebene 212 von Hand möglich. Jeder der Öffnungen 216, 217, 218, 220, 222 ist eine Vorkammer vorgeordnet.

Durch eine diesbezügliche Konstruktion ergibt sich eine Kennlinie in Bezug auf die aus der Öffnung 218 und den übrigen nicht abgedeckten Öffnungen 216, 217 strömende Luft entsprechend der Darstellung in Fig. 6 derart, dass über einen weiten Bereich eine im Wesentlichen horizontal bzw. schwach geneigt zur Horizontalen verlaufende Abhängigkeit zwischen Volumenstrom $\dot{V}$ und Druckdifferenz $\Delta p$, also der Differenz zwischen dem Innendruck $p_i$ und dem Außendruck $p_a$ ergibt.

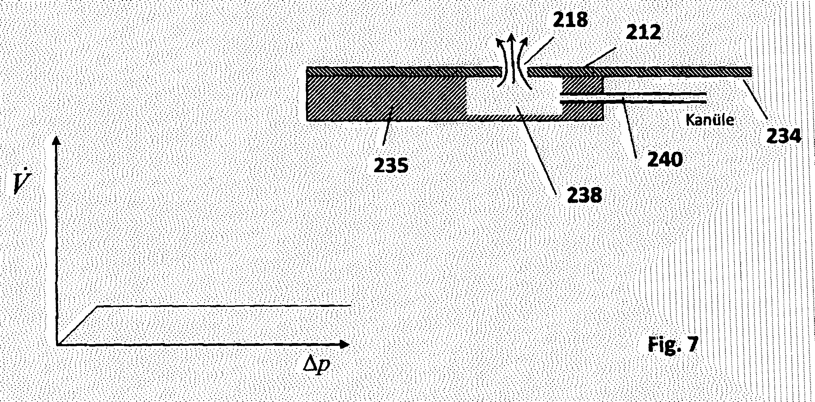

Der Fig. 7 ist eine weitere Ausführungsform des erfindungsgemäßen Lufttisches 200 im Ausschnitt zu entnehmen, bei dem ebenfalls der Volumenstrom der aus den nicht abgedeckten Öffnungen 216, 217, 218 ausströmenden Luft unabhängig von dem Innendruck $p_i$ des Raums 224 ist. Hierzu ist vorgesehen, dass an der außenseitig die Transportebene 212 bildenden Platte 234 eine Zwischenplatte 236 oder Abschnitte einer solchen befestigt ist, in der Aussparungen 238 ausgebildet sind, die Vorkammern 238 für die Öffnungen bilden, wobei jeder Öffnung eine Vorkammer vorgeordnet ist. In der zeichnerischen Darstellung ist die Vorkammer 238 der Öffnung 218 zugeordnet. Zwischen dem Innenraum 224 und der Vorkammer 238 wird über eine Kanüle 240 eine Verbindung hergestellt. Dabei ist der Querschnitt der Kanüle 240 derart gewählt, dass die Strömungsgeschwindigkeit der die Öffnungen 218 durchsetzenden Luft unabhängig von dem Druck $p_i$ in dem Raum 224 ist. Die Kanüle 240 kann derart ausgelegt sein, dass diese als kritische Düse wirkt, d.h. das die maximal erreichbare Strömungsgeschwindigkeit durch die Schallgeschwindigkeit begrenzt ist. Liegt Schallgeschwindigkeit vor, kann der Durchsatz nicht mehr gesteigert werden. Für eine entsprechende Anordnung ergibt sich eine Kennlinie entsprechend der Darstellung in Fig. 7 mit horizontalem Verlauf, d.h. der Volumenstrom V durch die Öffnung 218 ist unabhängig von der Druckdifferenz $\Delta p$ konstant. In dem horizontal verlaufenden Bereich kann sodann der Lufttisch betrieben werden, um ohne Änderung des Volumenstroms gewünschte Druckdifferenzen einzustellen, die in Abhängigkeit von dem Gewicht der zu transportierenden Lage eingestellt wird.

Es besteht auch die Möglichkeit, die Kanüle so zu dimensionieren, dass sich die Wirkung eines Laminar Flow Elementes ergibt.

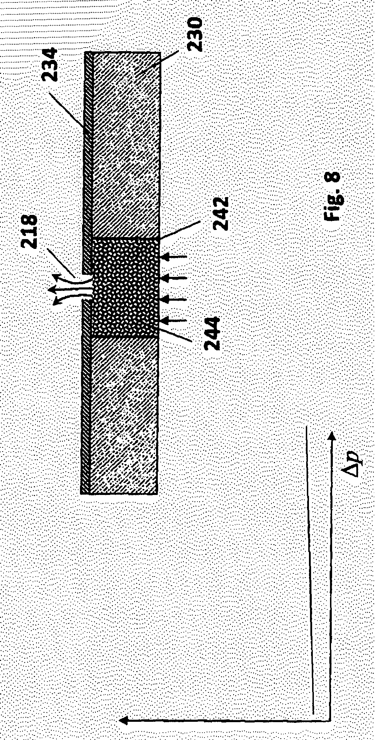

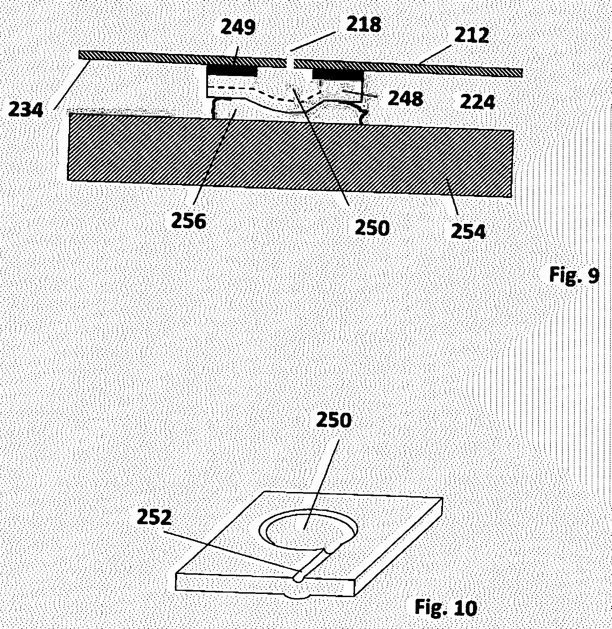

Eine weitere Ausführungsform des erfindungsgemäßen Lufttisches ist der Fig. 8 zu entnehmen. Wie die Prinzipdarstellung verdeutlicht, ist mit der Platte 234, die von den Öffnungen 216, 217, 218, 220, 222 durchsetzt ist, eine Zwischenplatte entsprechend der Platte 230 angeordnet, wobei jeder Öffnung 216, 217, 218, 220, 222 eine Vorkammer 242 zugeordnet ist, in der ein luftdurchlässiger Körper 244 angeordnet ist. Dabei ist die Luftdurchlässigkeit, d.h. die Porösität derart gewählt, dass ein Luftwiderstand aufgebaut wird, der sicherstellt, dass unabhängig vom Innendruck $p_i$ des Raums 224 und damit auch von der Anzahl der abgedeckten Öffnungen 220, 222 der Volumenstrom durch die Öffnung 218 weitgehend konstant ist, wie auch die Kennlinie in der Fig. 8 verdeutlicht. Den Fig. 9 und 10 ist eine bevorzugte Ausführungsform eines Lufttisches zu entnehmen, der der erfindungsgemäßen Lehre gehorcht, d. h., dass vor der jeweiligen Öffnung 218 ein Strömungswiderstand für die dem Raum 224 zugeführte Druckluft aufgebaut wird, der viel größer als derjenige ist, der von dem die Öffnungen abdeckenden Material gegenüber der die Öffnungen durchsetzenden Druckluft erzeugt wird. Hierzu ist vorgesehen, dass jeder Öffnung 208 unterseitig ein insbesondere tiefgezogenes Metallbauteil 248 zugeordnet ist, das z. B. eine Quader- oder Rechteckform mit einer Kantenlänge von 20 mm bis 30 mm und einer Dicke von etwa 0,1 mm aufweist. Mittig verläuft eine Vertiefung, die z. B. einen Durchmesser von 4 mm aufweisen kann. In der Vertiefung oder Senke 250 mündet ein Kanal 252, der einen Halbkreisquerschnitt mit einem Durchmesser von z. B. 0,1 mm aufweisen kann.

Die Senke 250 bildet den zuvor beschriebenen Vorraum, der mit dem von der Platte 234 und einer Bodenplatte 254 des Lufttisches begrenzten Raum 224 über den Kanal 252 verbunden ist. Durch die diesbezügliche Dimensionierung ist sichergestellt, dass durch den Kanal 252 ein Strömungswiderstand derart aufgebaut wird, dass der Volumenstrom V, der von dem Raum 224 über den Kanal 252 und der Senke 250 durch die Öffnung 218 strömt, unabhängig von in dem Raum 224 herrschendem Druck $p_i$, der seinerseits auf einen Wert eingestellt ist, der größer als der einwirkende Druck des Materials ist, das Löcher des Lufttischs abdeckt.

Wie sich aus der Prinzipdarstellung der Fig. 9 des Weiteren ergibt, ist das tiefgezogene Bauteil 248 unterseitig abgestützt, wobei die Unterseite des Bauteils 248 im Bereich der Senke 250 vollflächig unterstützt ist. Die Abstützung, die mit dem Bezugszeichen 256 gekennzeichnet ist, geht von der Bodenplatte 254 aus. Vorzugsweise ist das Bauteil, dass vorzugsweise aus Edelstahl besteht, an der Unterseite der Platte 234 durch ein Klebestreifen 249 befestigt.

Aus obigen Erläuterungen ergibt sich, dass die Größe des Volumenstroms $\dot{V}$ mechanisch und die der Druckdifferenz $\Delta p$ zwischen in dem Raum herrschenden Druck $p_i$ und außerhalb des Raums herrschenden Druck $p_a$ mittels Druckluftquelle eingestellt wird.

Durch die Ausbildung des Strömungswiderstands vor der jeweiligen Öffnung und die damit vorgegebene Größe des die Öffnung durchsetzenden Volumenstroms $\dot{V}$ wird der hydrostatische Druck der die Öffnungen durchsetzenden Luft genutzt, um eine oberhalb der Öffnung vorhandene Lage in einem Umfang anzuheben, dass ein schwebendes Verschieben der Lage entlang der Transportebene 212 erfolgen kann, indem die Lage z.B. von einer Person verschoben wird. Selbstverständlich besteht auch die Möglichkeit, mittels einer Handhabungseinrichtung die Lage entlang des Lufttisches zu bewegen.

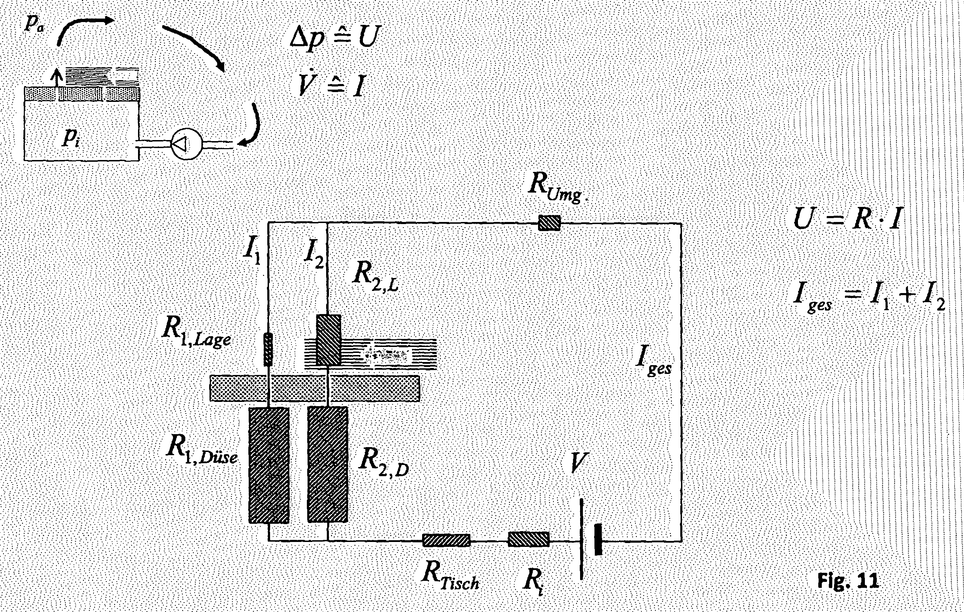

In der Fig. 11 soll anhand eines Ersatz-Schaltbilds das Prinzip der erfindungsgemäßen Lehre noch einmal verdeutlicht werden. Es wird eine Parallelität zwischen einem Stromkreis und einem erfindungsgemäßen Lufttisch gezeigt. Parallelitäten ergeben sich aus der Beschriftung, wobei $R_{2,D}$ bzw. $R_{1,}$ Düse der Strömungswiderstand $R_O$ in bzw. vor den Öffnungen ist, die auch als Düsen zu bezeichnen sind. Dargestellt ist, dass der in der Düse bzw. Öffnung oder vor der Düse ausgebildete Widerstand erheblich größer als der Widerstand ist, der auf Grund der Anzahl der abgedeckten Öffnungen oder Düsen aufgebaut wird. Somit ergibt sich die prinzipielle Unabhängigkeit des Volumenstroms durch die nicht abgedeckten Öffnungen, d.h., der Volumenstrom ist dem Grunde nach nicht abhängig von der Anzahl der durch die entlang der Transportebene bewegten Lage abgedeckten Öffnungen.

Konstanter oder weitgehend konstanter Volumenstrom soll bedeuten, dass eine Änderung des Volumenstroms in Abhängigkeit der abgedeckten Löcher von in etwa 10% im Sinne der Erfindung noch als konstant angesehen wird.

**Patentansprüche**

1. Verfahren zum Anheben von entlang einer Transportebene zu bewegendem Material, insbesondere Lage (214) oder Stapel von Bogen, wobei das Material von Öffnungen (216, 217, 218, 220, 222) in der Transportebene (212) durchsetzender Druckluft beaufschlagt wird, die einem die Transportebene unterseitig begrenzendem Raum (224) zugeführt wird, in dem ein Druck $P_i$ herrscht,
**dadurch gekennzeichnet,**
**dass** eine Entkopplung des in dem Raum (224) herrschenden Drucks $P_i$ von durch die Öffnungen (216, 217, 218, 220, 222) strömendem Volumenstrom V derart erfolgt, dass vor jeweiliger Öffnung ein Strömungswiderstand $R_O$ für die Druckluft aufgebaut wird mit $R_O \gg R_L$, wobei $R_L$ der Strömungswiderstand ist, der von dem m-Öffnungen mit $m \geq 1$ abdeckenden Material gegenüber der die von dem Material unbedeckten n-Öffnungen (216, 217, 218) durchsetzenden Druckluft erzeugt wird.

2. Verfahren zum Anheben von entlang einer Transportebene zu bewegendem Material, insbesondere Lage (214) oder Stapel von Bogen, wobei das Material von Öffnungen (216, 217, 218, 220, 222) in der Transportebene (212) durchsetzender Druckluft beaufschlagt wird, die einem die Transportebene unterseitig begrenzenden Raum (224) zugeführt wird,
**dadurch gekennzeichnet,**
**dass** von dem Material unbedeckten Öffnungen (216, 217, 218) mit $n \geq 1$ jeweils mit einem Volumenstrom $\dot{V}$ der Druckluft durchströmt werden, der unabhängig oder weitgehend unabhängig von in dem Raum (224) herrschenden Druck $p_i$ ist, wobei der Druck $p_i$ auf einen Wert eingestellt wird, der größer als von dem Material auf abgedeckte m-Löcher (220, 222) mit $m \geq 1$ einwirkender Druck $p_L$ ist.

3. Verfahren nach Anspruch 2,
**dadurch gekennzeichnet,**
**dass** der Volumenstrom V durch Aufbau eines Strömungswiderstands vor jeder Öffnung (216, 217, 218, 220, 222) eingestellt wird.

4. Verfahren nach zumindest einem der vorherigen Ansprüche,
**dadurch gekennzeichnet,**
**dass** das Material mittels hydrostatischen Drucks zu der Transportebene (212) beabstandet wird.

5. Verfahren nach zumindest einem der vorherigen Ansprüche,
**dadurch gekennzeichnet,**
**dass** der Strömungswiderstand $R_O$ zu dem Strömungswiderstand $R_L$ derart eingestellt wird, dass $2 R_L < R_O \leq 1000 R_L$, bevorzugterweise $10 R_L \leq R_O \leq 100 R_L$ ist.

6. Verfahren nach zumindest einem der vorherigen Ansprüche,

**dadurch gekennzeichnet,**
**dass** jede Öffnung (216, 217, 218, 220, 222) raumseitig jeweils ein gesonderter Vorraum (228, 238, 242, 250) vorgeordnet wird, der mit dem mit Druckluft zu beaufschlagenden Raum (224) über einen Kanal wie Hohlnadel (240) oder über eine mikroperforierte Folie verbunden wird, oder dass der Vorraum mit dem Raum über einen porösen Körper (244), insbesondere einen Körper aus der Gruppe Aktivkohle, Keramik, Metallschaum, verbunden wird.

7. Verfahren nach zumindest einem der vorhergehenden Ansprüche,
   **dadurch gekennzeichnet,**
   **dass** im Abstand A von einer unbedeckten Öffnung (216, 217, 218) die Strömungsgeschwindigkeit $V_A$ des die Öffnung durchsetzenden Gases beträgt 150 mm/sek $\leq V_A \leq$ 250 mm/sek, wobei 3 cm $\leq A \leq$ 7 cm ist.

8. Anordnung zum Transportieren von Material, insbesondere einer Lage (214) oder eines Stapels von Bogen, umfassend eine von Öffnungen (216, 217, 218, 220, 222) durchsetzte Transportebene (212), einen sich entlang dessen Unterseite erstreckenden Raum (224), mit dem ein Druck $p_i$ herrscht und mit dem die Öffnungen verbunden sind, sowie eine mit dem Raum verbundene Druckluftquelle (226),
   **dadurch gekennzeichnet,**
   **dass** Mittel vorgesehen sind, wodurch eine Entkopplung des in dem Raum (224) herrschenden Drucks $p_i$ von durch die Öffnungen (216, 217, 218, 220, 222) Strömendem Volumenstrom durch Aufbocken eines Strömungswiderstands $R_O$ vor den Öffnungen erfolgt, wobei $R_O \gg R_L$ mit $R_L$ Strömungswiderstand des Materials ist, der auf von dem Material abgedeckten m-Öffnungen (220, 222) mit m $\geq$ 1 erzeugbar ist.

9. Anordnung nach Anspruch 8,
   **dadurch gekennzeichnet, daß** die Mittel derart ausgebildet sind, dass raumseitig der Öffnung (218) ein Vorraum (238) vorgeordnet ist, der mit dem Raum (224) über einen Kanal wie eine Hohlnadel (240) verbunden ist.

10. Anordnung nach Anspruch 8,
    **dadurch gekennzeichnet, daß** die Mittel derart ausgebildet sind, dass raumseitig der Öffnung (218) ein Vorraum (228) vorgeordnet ist, der mit dem Raum (224) über eine mikroperforierte Folie (230) verbunden ist oder dass die mikroperforierte Folie die Öffnung transportebenenabgewandt abdeckt.

11. Anordnung nach Anspruch 8,
    **dadurch gekennzeichnet, daß** die Mittel derart ausgebildet sind, dass raumseitig der Öffnung (218) ein Vorraum (242) vorgeordnet ist, der mit dem Raum (224) über einen porösen Körper (244), insbesondere einen Körper aus der Gruppe Aktivkohle, Keramik, Metallschaum, verbunden ist, oder dass der poröse Körper die Öffnung transportebenenabgewandt abdeckt.

12. Anordnung nach Anspruch 9,
    **dadurch gekennzeichnet,**
    **dass** der Vorraum (250) eine Senke eines Elementes (248) ist, das sich unterseitig entlang der Transportebene (212) und unterhalb der Öffnung (218) erstreckt, wobei die Senke (250) über den Kanal (252) mit dem Raum (224) verbunden ist.

13. Anordnung nach Anspruch 9 oder 12
    **dadurch gekennzeichnet,**
    **dass** der Kanal (252) bzw. die Hohlnadel (240) als kritische Düse oder Laminar Flow Element ausgebildet ist.

**Claims**

1. Method for lifting material to be moved along a transport plane, in particular a layer (214) or stack of sheets, where said material is subjected to compressed air passing through openings (216, 217, 218, 220, 222) in said transport plane (212) and supplied to a space (224) limiting said transport plane on the underside, in which space a pressure $P_i$ prevails,
   **wherein**
   a decoupling of the pressure $P_i$ prevailing in the space (224) from the volume flow $\dot{V}$ through the openings (216, 217, 218, 220, 222) is achieved by building up a flow resistance $R_O$ in front of the openings, where $R_O \gg R_L$ with $R_L$ as the flow resistance generated by the material covering the m-openings with m $\geq$ 1 relative to the compressed air passing through n-openings (216, 217, 218) not covered by the material.

2. Method for lifting material to be moved along a transport plane, in particular a layer (214) or stack of sheets, where said material is subjected to compressed air passing through openings (216, 217, 218, 220, 222) in said transport plane (212) and supplied to a space (224) limiting said transport plane on the underside,
   **wherein**
   openings (216, 217, 218) not covered by the material with n $\geq$ 1 are each flowed through with a volume flow $\dot{V}$ of the compressed air that is independent or largely independent of the pressure $p_i$ prevailing in the space (224), where said pressure $p_i$ is set to a value that is greater than the pressure $p_L$ exerted by the material on covered m-holes (220, 222) with m $\geq$ 1.

3. Method according to claim 2,

**wherein**
the volume flow $\dot{V}$ is set by building up a flow resistance in front of each opening (216, 217, 218, 220, 222).

4.  Method according to at least one of the preceding claims,
    **wherein**
    the material is kept at a distance from the transport plane (212) by means of hydrostatic pressure.

5.  Method according to at least one of the preceding claims,
    **wherein**
    the flow resistance $R_O$ is set relative to the flow resistance $R_L$ such that $2\,R_L \leq R_O \leq 1000\,R_L$, preferably $10\,R_L \leq R_O \leq 100\,R_L$.

6.  Method according to at least one of the preceding claims,
    **wherein**
    each opening (216, 217, 218, 220, 222) is provided in front and on the space side with a separate forward space (228, 238, 242, 250) which is connected to the space (224) to be subjected to compressed air via a duct such as a hollow needle (240) or via a micro-perforated film, or said forward space is connected to said space via a porous element (244), in particular an element from the group of activated carbon, ceramic and metal foam.

7.  Method according to at least one of the preceding claims,
    **wherein**
    at a distance A from an uncovered opening (216, 217, 218), the flow velocity $V_A$ of the gas passing through the opening is 150 mm/sec $\leq V_A \leq 250$ mm/sec, where 3 cm $\leq A \leq 7$ cm.

8.  Arrangement for transporting material, in particular a layer (214) or stack of sheets, comprising a transport plane (212) passed through by openings (216, 217, 218, 220, 222), a space (224) extending along its underside, with which a pressure $p_i$ prevails and to which openings are connected, and a compressed air source (226) connected to said space,
    wherein
    means are provided by which a decoupling of the pressure $p_i$ prevailing in the space (224) from the volume flow through the openings (216, 217, 218, 220, 222) is achieved by building up a flow resistance $R_O$ in front of the openings, where $R_O \gg R_L$ with $R_L$ as the flow resistance of the material that can be generated on m-openings (220, 222) covered by the material with $m \geq 1$.

9.  Arrangement according to claim 8,
    **wherein**

the means are designed such that in front and on the space side of the opening (218) a forward space (238) is provided that is connected to the space (224) via a duct such as a hollow needle (240).

10. Arrangement according to claim 8,
    **wherein**
    the means are designed such that in front and on the space side of the opening (218) a forward space (228) is provided that is connected to the space (224) via a micro-perforated film (230), or the micro-perforated film covers the opening facing away from the transport plane.

11. Arrangement according to claim 8,
    **wherein**
    the means are designed such that in front and on the space side of the opening (218) a forward space (242) is provided that is connected to the space (224) via a porous element (244), in particular an element from the group of activated carbon, ceramic and metal foam, or the porous element covers the opening facing away from the transport plane.

12. Arrangement according to claim 9,
    **wherein**
    the forward space (250) is a depression in an element (248) extending on the underside along the transport plane (212) and underneath the opening (218), where said depression (250) is connected to the space (224) via the duct (252).

13. Arrangement according to claim 9 or 12,
    **wherein**
    the duct (252) or the hollow needle (240) is designed as a critical nozzle or laminar flow element.

**Revendications**

1.  Procédé de levage de matériau à déplacer le long d'un plan de transport, notamment une couche (214) ou une pile de feuilles, sachant que le matériau est exposé à de l'air comprimé traversant des orifices (216, 217, 218, 220, 222) dans le plan de transport (212), cet air comprimé étant amené dans un espace (224) affleurant la face inférieure du plan de transport et dans lequel une pression $P_i$ règne,
    **caractérisé en ce**
    **que** la pression $P_i$ régnant dans l'espace (224) est découplée du débit volumique $\dot{V}$ traversant les orifices (216, 217, 218, 220, 222) de sorte qu'une résistance à l'écoulement $R_O$ est établie pour l'air comprimé devant l'orifice concerné, où $R_O \gg R_L$, $R_L$ étant la résistance à l'écoulement qui est produite par le matériau recouvrant les m orifices, où $m \geq 1$, s'opposant à l'air comprimé traversant les n orifices (216, 217, 218) non recouverts par le matériau.

**2.** Procédé de levage de matériau à déplacer le long d'un plan de transport, notamment une couche (214) ou une pile de feuilles, sachant que le matériau est exposé à de l'air comprimé traversant des orifices (216, 217, 218, 220, 222) dans le plan de transport (212), cet air comprimé étant amené dans un espace (224) affleurant la face inférieure du plan de transport,
**caractérisé en ce**
**que** les n orifices non recouverts par le matériau (216, 217, 218), où n $\geq$ 1, sont parcourus par un débit volumique V de l'air comprimé qui est indépendant ou pratiquement indépendant de la pression $p_i$ régnant dans l'espace (224), sachant que la pression $p_i$ est réglée sur une valeur supérieure à la pression $p_L$ s'exerçant sur les m trous (220, 222) recouverts par le matériau, où m $\geq$ 1.

**3.** Procédé selon la revendication 2,
**caractérisé en ce**
**que** le débit volumique $\dot{V}$ est réglé par l'établissement d'une résistance à l'écoulement devant chaque orifice (216, 217, 218, 220, 222).

**4.** Procédé selon au moins une des revendications précédentes,
**caractérisé en ce**
**que** le matériau est tenu à distance du plan de transport (212) au moyen d'une pression hydrostatique.

**5.** Procédé selon au moins une des revendications précédentes,
**caractérisé en ce**
**que** la résistance à l'écoulement $R_O$ est réglée par rapport à la résistance à l'écoulement $R_L$ de façon à avoir 2 $R_L \leq R_O \leq$ 1000 $R_L$, de préférence 10 $R_L \leq R_O \leq$ 100 $R_L$.

**6.** Procédé selon au moins une des revendications précédentes,
**caractérisé en ce**
**qu'**un sas spécial (228, 238, 242, 250) est intercalé devant chaque orifice (216, 217, 218, 220, 222) côté espace, lequel sas est relié à l'espace (224) alimenté en air comprimé par un canal tel qu'une aiguille creuse (240) ou par un film microperforé, ou que le sas est relié à l'espace par un corps poreux (244), notamment par un corps appartenant au groupe charbon actif, céramique, mousse métallique.

**7.** Procédé selon au moins une des revendications précédentes,
**caractérisé en ce**
**qu'**à la distance A d'un orifice non recouvert (216, 217, 218), la vitesse d'écoulement $V_A$ du gaz traversant l'orifice est telle que 150 mm/s $\leq V_A \leq$ 50 mm/s, où 3 cm $\leq$ A $\leq$ 7 cm.

**8.** Dispositif de transport de matériau, notamment d'une couche (214) ou d'une pile de feuilles, comprenant un plan de transport (212) transpercé d'orifices (216, 217, 218, 220, 222), un espace (224) s'étendant le long de la face inférieure dudit plan, où règne une pression $p_i$ et qui est relié aux orifices, ainsi qu'une source d'air comprimé (226) reliée à l'espace,
**caractérisé en ce**
**que** des moyens sont prévus pour découpler la pression $p_i$ régnant dans l'espace (224) du débit volumique traversant les orifices (216, 217, 218, 220, 222) en établissant une résistance à l'écoulement $R_O$ devant les orifices, où $R_O \gg R_L$, $R_L$ étant la résistance à l'écoulement du matériau qui peut être produite sur les m orifices (220, 222) recouverts par le matériau, où m $\geq$ 1.

**9.** Dispositif selon la revendication 8,
**caractérisé en ce**
**que** les moyens sont constitués de telle façon qu'un sas (238) relié à l'espace (224) par un canal, tel une aiguille creuse (240), est intercalé devant l'orifice (218) côté espace.

**10.** Dispositif selon la revendication 8,
**caractérisé en ce**
**que** les moyens sont constitués de telle façon qu'un sas (228) relié à l'espace (224) par un film microperforé (230) est intercalé devant l'orifice (218) côté espace, ou que le film microperforé recouvre l'orifice du côté opposé au plan de transport.

**11.** Dispositif selon la revendication 8,
**caractérisé en ce**
**que** les moyens sont constitués de telle façon qu'un sas (242) est intercalé devant l'orifice (218) côté espace, ledit sas étant relié à l'espace (224) par un corps poreux (244), notamment par un corps appartenant au groupe charbon actif, céramique, mousse métallique, ou que le corps poreux recouvre l'orifice du côté opposé au plan de transport.

**12.** Dispositif selon la revendication 9,
**caractérisé en ce**
**que** le sas (250) est une cuvette d'un élément (248), lequel s'étend le long de la face inférieure du plan de transport (212) et en dessous de l'orifice (218), sachant que la cuvette (250) est reliée à l'espace (224) par le canal (252).

**13.** Dispositif selon la revendication 9 ou 12,
**caractérisé en ce**
**que** le canal (252) ou l'aiguille creuse (240) constitue une buse critique ou un élément d'écoulement laminaire.

Fig. 1

EP 2 634 124 B1

$p_a$

14

$p_i$ 24

22   20   18   16

26

**Fig. 2**

Volumenstrom V_p [m³/s]

4,5

4

3,5

3

2,5

2

1,5

1

0,5

0

34

32

30

28

0   0,5   1   1,5

Druckdifferenz Δp [bar]

Fig. 3

Gebläse 1

Gebläse 2

hohe Leistung

254

250

kleine Leistung

252

Volumenstrom V̇₃_p [m/s]

Druckdifferenz Δp [bar]

-0,1   0,   0,1   0,3   0,5   0,7   0,9   1,1   1,3   1,5

0   1   2   3   4   5   6

Fig. 4

Fig. 5

EP 2 634 124 B1

Fig. 6

Fig. 7

Fig. 8

Fig. 9

Fig. 10

Fig. 11

$\Delta p \mathrel{\hat{=}} U$

$\dot{V} \mathrel{\hat{=}} I$

$U = R \cdot I$

$I_{ges} = I_1 + I_2$

$p_a$

$p_i$

$R_{Umg.}$

$I_{ges}$

$I_1$

$I_2$

$R_{2,L}$

$R_{1,Lage}$

$R_{1,Düse}$

$R_{2,D}$

$V$

$R_{Tisch}$

$R_i$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2449620 C
- DE 7503458 U
- DE 7505601 U
- DE 7731677 U
- DE 202010005241 U
- DE 10259754 A
- US 4874273 A
- US 2785928 A

- US 20050117980 A1
- DE 2141957 A
- DE 2134512 A
- FR 2256354 A
- DE 102005060749 A1
- GB 1236125 A
- EP 0828101 A1